# EUROPÄISCHE PATENTSCHRIFT

(11) **EP 2 236 975 B1**
(45) Veröffentlichungstag und Bekanntmachung des Hinweises auf die Patenterteilung: **20.08.2014**
(21) Anmeldenummer: 10003403.2
(22) Anmeldetag: 30.03.2010
(51) Int. Cl.: F41G 7/36, F41F 3/06, B64D 1/04

(54) **Verfahren zum Abkoppeln eines Flugkörpers von einem Trägerluftfahrzeug**
Method for decoupling a missile from a carrier aircraft
Procédé d'isolation d'un corps volant d'un avion lanceur

(30) Priorität: 02.04.2009 DE 102009016004
(43) Veröffentlichungstag der Anmeldung: 06.10.2010
(73) Patentinhaber: MBDA Deutschland GmbH, 86529 Schrobenhausen (DE)
(72) Erfinder: Grabmeier, Michael, 83022 Rosenheim (DE)
(74) Vertreter: Avenhaus, Beate

(56) Entgegenhaltungen:
- EP-A1- 0 247 712
- DE-A1- 10 022 455
- DE-A1- 10 132 184
- DE-A1-102008 034 618
- DE-C1- 3 411 439
- US-A- 5 590 850
- US-A- 5 722 614

## Beschreibung

### TECHNISCHES GEBIET

Die vorliegende Erfindung betrifft ein Verfahren zum Abkoppeln eines Flugkörpers von einem Trägerluftfahrzeug, wobei der Flugkörper an einer Unterseite des Trägerluftfahrzeugs mittels einer Abkoppelvorrichtung lösbar angebracht ist.

### STAND DER TECHNIK

Üblicherweise weist der Flugkörper an seiner Oberseite zumindest zwei Ösen auf, in die zum Öffnen betätigbare Verriegelungsmittel der Abkoppelvorrichtung des Trägerluftfahrzeugs eingreifen. Ejektoren der Abkoppelvorrichtung stoßen beim Abkoppeln den Flugkörper vom Trägerluftfahrzeug ab. Der Flugkörper ist so an einem Pylon des Trägerluftfahrzeugs hängend angebracht. Abhängig von der Art der Anbringung und der Schwerpunktlage des Flugkörpers kann dieser bereits im angekoppelten Zustand ein Nickmoment, das sogenannte Installations-Nickmoment, erfahren. Die resultierenden Zug- oder Druckkräfte sind in den Aufnehmern des Pylons messbar. Die während des Fluges auf das Trägerluftfahrzeug und den daran hängend angebrachten Flugkörper einwirkende anströmende Luft bewirkt ein zusätzliches aerodynamisches Nickmoment, dass der Flugkörper erfährt. Die Summe aus dem Installations-Nickmoment und dem aerodynamischen Nickmoment ergibt ein resultierendes Nickmoment, das bei entsprechender Instrumentierung an den Aufnehmern des Pylons während eines Tragfluges messbar ist. Unmittelbar nach dem Abkoppeln vom Trägerluftfahrzeug bewirkt dieses resultierende Nickmoment eine Rotation des Flugkörpers um die Nickachse. Im Augenblick des Abkoppelns kann das resultierende Nickmoment zusätzlich von einem Abkoppel-Nickmoment überlagert werden, welches dadurch entstehen kann, dass die Abstoßkräfte, die von den Ejektoren erzeugt werden, bezüglich der Nickachse des Flugkörpers asymmetrisch auf den Flugkörper einwirken.

Ist das sich aus dem resultierenden Nickmoment und dem Abkoppel-Nickmoment ergebende Gesamt-Nickmoment derart, dass dadurch die Nase des Flugkörpers nach oben gedreht wird, so besteht die Gefahr, dass die Nase des abgekoppelten Flugkörpers mit dem Trägerluftfahrzeug kollidiert.

Um eine derartige ungewollte und für das Trägerluftfahrzeug gefährliche Kollision zu vermeiden, erfolgt die Anbringung des Flugkörpers am Trägerluftfahrzeug derart, dass die Längsachse des Flugkörpers in einem Winkel zu Längsachse des Trägerluftfahrzeugs so geneigt ist, dass die Nase des Flugkörpers nach unten gerichtet ist. Durch diese Anbringung wird ein negativer Installations-Anstellwinkel, der sogenannte negative Nickwinkel-Offset, zwischen Flugkörper und Trägerluftfahrzeug (zum Beispiel -3°) erzeugt, der dafür sorgen soll, dass die Nase des Flugkörpers beim Abkoppeln nach unten, also vom Trägerluftfahrzeug weg, dreht. Diese erwünschte Wirkung tritt aber nur bei geringen Anstellwinkeln des Trägerluftfahrzeugs ein, nämlich dann, wenn der Anstellwinkel kleiner ist, als der negative Nickwinkel-Offset. Der Anstellwinkel des Trägerluftfahrzeugs ist abhängig von der Fluggeschwindigkeit (Mach-Zahl; KEAS = knots equivalent airspeed), der Flughöhe und der Masse des Trägerluftfahrzeugs.

Bei hoher Geschwindigkeit und niedriger Masse des Trägerluftfahrzeugs ergibt sich ein geringer Anstellwinkel des Trägerluftfahrzeugs und damit ein sehr großes nach unten drehendes Nickmoment, so dass beim Abkoppeln des Flugkörpers im Schnellflug die Gefahr besteht, dass der Flugkörper in eine unkontrollierbare Fluglage gerät, bevor eine Flugregelung des Flugkörpers einsetzen kann, um diesen zu stabilisieren, und er schließlich abstürzt. Um dies zu vermeiden, ist es bekannt, aerodynamisches Steuerflächen des Flugkörpers in Abhängigkeit von der Geschwindigkeit und der Flughöhe des Trägerluftfahrzeugs so voreinzustellen, dass sich ein die Nase des Flugkörpers nach oben drehendes, positives Nickmoment ergibt, um das aerodynamische Installations-Nickmoment zu schwächen. Das Installations-Nickmoment des Flugkörpers ist somit bei Langsamflugbedingungen (größere Anstellwinkel) gering (nach oben oder nach unten gerichtet) und wird bei höheren Fluggeschwindigkeiten, wenn der Anstellwinkel des Trägerluftfahrzeugs geringer ist, durch eine entsprechend entgegengesetzt gerichtete Voreinstellung der aerodynamischen Steuerflächen des Flugkörpers wieder abgeschwächt.

Ein negativer Installations-Anstellwinkel, bei welchem die Nase des Flugkörpers von der Unterseite des Trägerluftfahrzeugs nach unten weiter entfernt ist, als das Heck des Flugkörpers führt jedoch dazu, dass die anströmende Luft oberhalb des Flugkörpers beschleunigt wird, wodurch sich zwischen dem Trägerluftfahrzeug und dem Flugkörper ein Unterdruck einstellt, der im Fall des Abkoppelns des Flugkörpers ein Ansaugen des Hecks des Flugkörpers zum Rumpf des Trägerluftfahrzeugs bewirkt, was wiederum die Gefahr der Kollision mit dem Trägerluftfahrzeug erhöht, insbesondere dann, wenn der Flugkörper nicht unter der Tragfläche des Trägerluftfahrzeugs, sondern unter dessen Rumpf angebracht ist.

Aus der EP 0 247 712 A1 ist eine luftgestützte Raketenabschussvorrichtung bekannt, die an einem Trägerflugzeug angebracht sein kann und mittels der eine Rakete während des Fluges vom Trägerflugzeug gestartet werden kann. Dabei geht es darum, wie in einem Notfall die Rakete vom Trägerflugzeug abgesetzt werden kann, ohne dass die Rakete ziellos abgeschossen werden muss und ohne dass die gesamte Startvorrichtung vom Trägerflugzeug abgesprengt werden muss.

Es wird ein Abwurfmechanismus beschrieben, bei dem eine Hilfsschiene der Startvorrichtung zusammen mit der Rakete von der Startvorrichtung getrennt und somit abgeworfen werden kann. Es wird dazu eine Sicherungsvorrichtung der Hilfsschiene gelöst und dann werden die Hilfsschiene und die Rakete nach hinten bewegt, bis die Hilfsschiene aus der zugeordneten Hauptschiene der Startvorrichtung auskoppelt. Bei dieser Rückwärtsbewegung der Hilfsschiene gerät eine geneigte Nockenfläche an der Hilfsschiene (21a) kurz vor der Trennung der Hilfsschiene von der Startvorrichtung in Berührung mit einer ebenfalls geneigten Fläche (25) einer Ableitvorrichtung an der Startvorrichtung, so dass die Hilfsschiene mitsamt der Rakete beim Auftreffen und Aneinandergleiten dieser beiden geneigten Flächen einen nach unten gerichteten Kraftvektor erfährt, der auf die Rakete einwirkt und ein positives (nach unten gerichtetes) Nickmoment bewirkt.

Gleichzeitig wird die Hilfsschiene von einem Ejektormechanismus nach unten ausgestoßen, wobei die Trennung der Hilfsschiene von der Startvorrichtung erfolgt.

Aus der DE 101 32 184 A1 ist ein Verfahren für eine Abgangslenkung von Flugkörpern von einem Luftfahrzeug bekannt, bei dem der Ablauf der Abkoppelung des Flugkörpers vom Trägerluftfahrzeug nach einem zu einer individuellen momentanen Abgangssituation zugehörigen Abgangsprogramm abläuft. Dazu erfolgt im Moment der Trennung des Flugkörpers vom Trägerluftfahrzeug eine aktive Abgangslenkung des Flugkörpers. Es wird in der Beschreibungseinleitung lediglich erwähnt, dass zur Abgangslenkung eine Voreinstellung von Lenkflächen des Flugkörpers abhängig von mittiger, linker oder rechter Platzierung am Flugzeug vorgenommen werden kann.

### DARSTELLUNG DER ERFINDUNG

Aufgabe der vorliegenden Erfindung ist es, ein gattungsgemäßes Verfahren anzugeben, bei welchem stets gewährleistet ist, dass der Flugkörper beim Abkoppeln ein die Nase nach unten drehendes Nickmoment erfährt, ohne dass dabei die Gefahr besteht, dass der Flugkörper in eine unkontrollierbare Fluglage gerät.

Diese Aufgabe wird durch das im Patentanspruch 1 angegebene Verfahren gelöst.

Dazu werden bereits vor dem Abkoppeln des Flugkörpers vom Trägerluftfahrzeug aerodynamische Steuerflächen des Flugkörpers um einen vorgegebenen Winkel in eine Position ausgelenkt, in der die anströmende Luft ein die Nase des Flugkörpers nach unten drehendes, negatives Nickmoment erzeugt.

Im Gegensatz zur bisher bekannten technischen Lehre, ein großes negatives Installations-Nickmoment mittels hoher Geschwindigkeiten oder niedrigen Anstellwinkeln des Trägerluftfahrzeugs zu erzeugen, um dadurch den sicheren Abgang des Flugkörpers mit der Nase nach unten zu gewährleisten, und dieses durch entsprechendes Gegensteuern des Steuerflächen des Flugkörpers abzuschwächen, um es noch kontrollieren zu können, also ein die Nase entgegengesetzt nach oben drehendes, positives Nickmoment zu erzeugen, sieht das Verfahren der vorliegenden Erfindung vor, die Steuerflächen des Flugkörpers beim Abkoppeln so einzustellen, dass ein die Nase des Flugkörpers nach unten drehendes, negatives Nickmoment erzeugt wird. Dadurch kann der Flugkörper auch bei niedrigen Geschwindigkeiten und bei größeren Anstellwinkeln des Trägerflugzeuges (im Langsamflug, wenn also kein Installations-Nickmoment oder nur das Moment durch die Abstoßkräfte vorhanden ist) vom Trägerflugzeug sicher abgekoppelt werden ohne das Trägerluftfahrzeug zu gefährden, nämlich mit der Nase nach unten.

Vorzugsweise ist der vorgegebene Winkel der Auslenkung der aerodynamischen Steuerflächen unabhängig vom Anstellwinkel des Trägerluftfahrzeugs im Zeitpunkt des Abkoppelns.

In diesem Fall ist es weiter vorteilhaft, wenn die Flugzustandsregelung des Flugkörpers unmittelbar nach dem Abkoppeln des Flugkörpers einsetzt und zwar sobald die beim Abkoppeln des Flugkörpers auftretenden Abstoßimpulse abgeklungen sind. Diese Abstoßimpulse werden erzeugt, durch die in der Abkoppelvorrichtung vorgesehenen Ejektoren, die die Kopplungselemente des Flugkörpers und des Trägerluftfahrzeugs im geöffneten Zustand voneinander wegdrücken. Durch diese Abstoßkräfte wird ein Abstoßmoment erzeugt, das im ungünstigen Fall bewirkt, dass die Nase des Flugkörpers nach oben dreht. Die gewählte Rudervoreinstellung, die ein Gegenmoment "Nase nach unten" bewirkt, muss das Abstoßmoment mehr als kompensieren, so dass ein relevanter Momentenimpuls übrigbleibt, der die Nase des Flugkörpers nach unten dreht. Ein weiterer Vorteil der unmittelbar nach dem Abkoppeln des Flugkörpers einsetzenden Flugzustandsregelung besteht darin, dass im Fall eines Teilversagens der Abkoppelvorrichtung, also wenn nur einer der Ejektoren auslöst oder wenn einer der Ejektoren verzögert auslöst, die Flugzustandsregelung des Flugkörpers sofort eingreifen und dem dadurch entstehenden unbeabsichtigten Nickmoment entgegenwirken und so die Fluglage des Flugkörpers stabilisieren kann. Vorzugsweise erfolgt die Auslenkung der Steuerflächen des Flugkörpers um den vorgegebenen Winkel nur dann, wenn das Trägerluftfahrzeug im Zeitpunkt des Abkoppelns einen vorgegebenen Anstellwinkel überschreitet, wobei der Winkel der Auslenkung der Steuerflächen oberhalb des vorgegebenen Anstellwinkels konstant ist. Dieses Verfahren kann dann sinnvoll sein, wenn der Flugkörper mit einem geringen negativen Installations-Anstellwinkel unter dem Trägerluftfahrzeug angebracht ist, der bei hohen Fluggeschwindigkeiten, also wenn der Anstellwinkel des Trägerluftfahrzeugs gering ist, ausreicht, um ein negatives Nickmoment zu erzeugen, das beim Abkoppeln die Nase der Flugkörpers nach unten drückt. Lediglich im Fall des Langsamflugs, also wenn das Trägerluftfahrzeug einen größeren positiven Anstellwinkel einnimmt, werden die Steuerflächen des Flugkörpers ausgelenkt, um auch in diesem Flugzustand zu gewährleisten, dass der Flugkörper beim Abkoppeln ein die Nase nach unten drehendes Nickmoment erfährt. Bei diesem Verfahren erfolgt die Auslenkung der Steuerflächen des Flugkörpers vor dem Abkoppeln somit nur im Langsamflug, wenn ein geringes Moment nach unten wirkt, wodurch es der Flugregelung des Flugkörpers wiederum ermöglicht wird, durch rechtzeitiges Eingreifen den Flugzustand des Flugkörpers zu stabilisieren.

In einer anderen bevorzugten Ausbildung des Verfahrens der Erfindung ist der vorgesehene Winkel der Auslenkung der aerodynamischen Steuerflächen abhängig vom Anstellwinkel des Trägerluftfahrzeugs im Zeitpunkt des Abkoppelns.

Vorteilhaft ist dabei, wenn der Winkel, um den die Steuerflächen ausgelenkt werden, mit zunehmendem Anstellwinkel des Trägerluftfahrzeugs größer wird. Diese dynamische Einstellung der Steuerflächen führt dazu, dass das erfindungsgemäße Verfahren noch besser an den jeweiligen Flugzustand angepasst ist. Bei einem durch eine große Masse des Trägerluftfahrzeugs bedingten hohen Anstellwinkel kann bei größerer Geschwindigkeit die Anströmung ein stärkeres positives Installations-Nickmoment (Nase nach oben) erzeugen, - weswegen dann die Auslenkung der Steuerflächen des Flugkörpern noch größer sein muss. Der Winkel, um den die Steuerflächen ausgelenkt werden, ist folglich abhängig vom Anstellwinkel des Trägerluftfahrzeugs und somit abhängig von der Fluggeschwindigkeit (KEAS), der Flughöhe und der Masse des Trägerluftfahrzeugs.

Zusätzlich zum bisher beschriebenen Verfahren können das Trägerluftfahrzeug und/oder der Flugkörper mit einer Sicherheitseinrichtung versehen sein, die ein Abkoppeln des Flugkörpers nur dann zulässt, wenn der Anstellwinkel des Flugkörpers unterhalb eines vorgegebenen Schwellenwertes liegt. Dieser Anstellwinkel des Flugkörpers setzt sich zusammen aus dem Installations-Anstellwinkel und dem aerodynamischen Anstellwinkel des Trägerluftfahrzeugs. Wenn also der Flugkörper im noch angekoppelten Zustand derart angeströmt wird, dass im Moment des Abkoppelns die Nase des Flugkörpers nach oben drehen würde, wird ein Abkoppeln des Flugkörpers vom Trägerluftfahrzeug verhindert.

Eine weitere Ausbildung des erfindungsgemäßen Verfahrens zum Abkoppeln eines Flugkörpers von einem Trägerluftfahrzeug sieht vor, dass die Abkoppelvorrichtung im Flug nur dann betätigbar ist, wenn das Trägerluftfahrzeug bei gegebener Masse eine Fluggeschwindigkeit erreicht hat, bei der der Anstellwinkel des Trägerluftfahrzeugs ausreichend ist, damit die anströmende Luft auf den Flugkörper ein die Nase des Flugkörpers nach unten drehendes Nickmoment ausübt. Durch diese Weiterbildung wird verhindert, dass der Flugkörper im extremen Langsamflug, also wenn das Trägerluftfahrzeug einen großen positiven Anstellwinkel einnimmt und wenn folglich der Anstellwinkel des am Trägerluftfahrzeug angebrachten Flugkörpers ebenfalls so groß ist, dass dieser beim Abkoppeln ein die Nase nach oben drehendes Nickmoment erfährt, vom Trägerluftfahrzeug abgekoppelt werden kann.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: schematisch die geometrischen Winkelverhältnisse und die Anströmung bei Anbringung eines Flugkörpers an einem Trägerluftfahrzeug im Schnellflug;
- Fig. 2: schematisch die geometrischen Winkelverhältnisse und die Anströmung bei Anbringung eines Flugkörpers an einem Trägerluftfahrzeug im Langsamflug.

### DARSTELLUNG VON BEVORZUGTEN AUSFÜHRUNGSBEISPIELEN

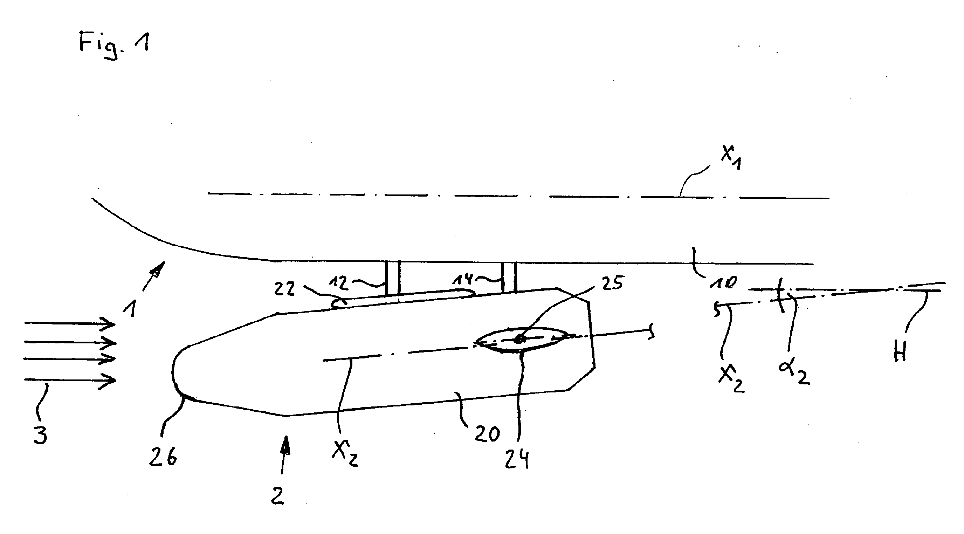

In Figur 1 ist schematisch ein Trägerluftfahrzeug 1 vorgesehen, unter dessen Rumpf 10 ein Flugkörper 2 mittels einer (nicht gezeigten) Abkoppelvorrichtung an Halterungen 12, 14 lösbar angebracht ist, die unter dem Rumpf 10 des Trägerluftfahrzeugs 1 vorgesehen sind. Ein derartiger Flugkörper kann beispielsweise ein Marschflugkörper oder ein anderer unbemannter Flugkörper sein.

Der unbemannte Flugkörper 2 umfasst einen Rumpf 20, Tragflächen 22, die nach dem Abkoppeln vom Trägerluftfahrzeug 1 ausschwenkbar sind, ein (nicht gezeigtes) Triebwerk und seitlich im Heckbereich angebrachte Steuerflächen 24, von denen in der Figur nur die linksseitige Steuerfläche gezeigt ist. Die Steuerflächen 24 sind um eine horizontale Querachse 25 schwenkbar am Rumpf 20 angebracht. Weiterhin enthält der Flugkörper 2 einen (nicht gezeigten) Aufnahmeraum für eine Nutzlast und eine (nicht gezeigte) Bordelektronik, die im angekoppelten Zustand des Flugkörpers 2 am Trägerluftfahrzeug 1 mit einer Bordelektronik des Trägerluftfahrzeugs 1 elektrisch und zum Datenaustausch verbunden ist und die eine Flugregelungseinrichtung für den Flugkörper 2 aufweist.

Der in Figur 1 schematisch dargestellte Flugzustand des Trägerluftfahrzeugs 1 ist der Schnellflug, bei welchem die Längsachse X₁ des Trägerluftfahrzeugs 1 im Wesentlichen parallel zu einer Horizontalen H verläuft, das Trägerluftfahrzeug 1 also nur einen geringen positiven Anstellwinkel aufweist.

Der Flugkörper 2 ist am Trägerluftfahrzeug 1 so angebracht, dass dessen Nase nach unten gerichtet ist. Die Längsachse X₂ des Flugkörpers 2 verläuft somit in einem Winkel α₂ zur Horizontalen H. Da die Nase 26 des Flugkörpers 2 dabei nach unten gerichtet ist, wird der Winkel α₂ als negativer Winkel definiert. Bei der Darstellung der Figur 1 wird angenommen, dass die Anströmung von Trägerluftfahrzeug und Flugkörper, die durch die Pfeile 3 symbolisiert ist, horizontal verläuft, also parallel zur Horizontalen H. Folglich stellt der Winkel α₂, zwischen der Längsachse X₂ des Flugkörpers 2 und der Längsachse X₁ des Trägerluftfahrzeugs 1 einen negativen Anstellwinkel ein. Dieser Winkel α₂ wird als "Nickwinkel-Offset" oder in dieser Anmeldung auch als "Installations-Anstellwinkel" bezeichnet. Aus Platzgründen ist die Achse X₂ geschnitten und parallel versetzt dargestellt, um die geometrischen Verhältnisse in der Figur darstellen zu können.

Wird in der in Figur 1 schematisch dargestellten Fluglage der Flugkörper 2 vom Trägerluftfahrzeug 1 abgekoppelt, so wirkt die Anströmung 3 auf die nach unten gerichtete Nase 26 des Flugkörpers 2 derart, dass die Nase 26 aufgrund des negativen Anstellwinkels α₂ durch die Anströmung 3 weiter nach unten gedrückt wird. Eine Kollision der Nase 26 der Flugkörpers 2 mit dem Trägerluftfahrzeug 1 ist daher nicht zu erwarten und der sichere Abgang des Flugkörpers vom Trägerflugzeug ist daher gewährleistet.

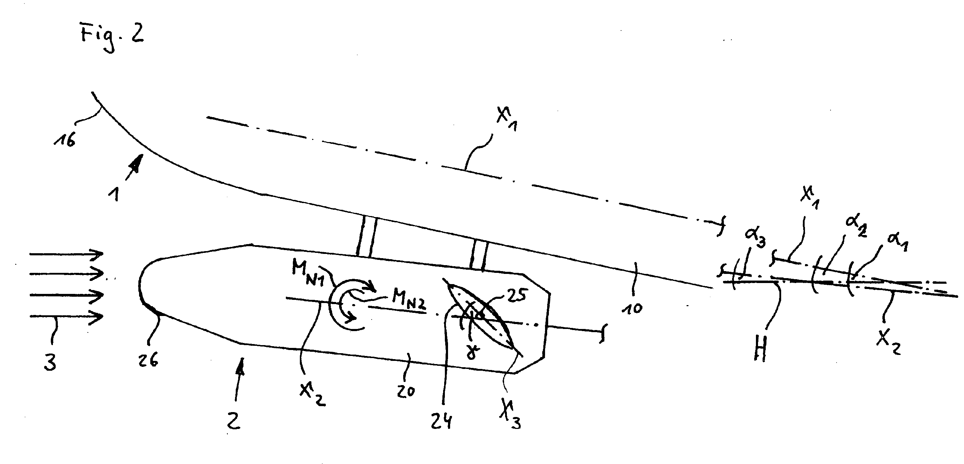

In Figur 2 ist ein Flugzustand schematisch dargestellt, in welchem das Trägerluftfahrzeug 1 im Langsamflug fliegt, also gegenüber der Horizontalen H einen relevanten positiven Anstellwinkel α₁ einnimmt, bei dem die Nase 16 des Trägerluftfahrzeugs 1 nach oben gerichtet ist. Auch in der Darstellung der Figur 2 sind die Flugzeuglängsachse X₁ und die Flugkörperlängsachse X₂ geschnitten und parallel versetzt dargestellt, um die geometrischen Verhältnisse im rechten Teil der Figur zeigen zu können.

Der Installations-Anstellwinkel α₂ zwischen der Flugzeuglängsachse X₁ und der Flugkörperlängsachse X₂ ist gegenüber dem Winkel α₂ in Figur 1 unverändert geblieben, da dieser Winkel durch die geometrischen Verhältnisse der Anbringung des Flugkörpers 2 am Trägerluftfahrzeug 1 fest vorgegeben ist.

Da das Trägerluftfahrzeug 1 im gezeigten Beispiel einen positiven Anstellwinkel α₁ einnimmt, der größer ist als der Installations-Anstellwinkel α_{2,} nimmt auch die Längsachse X₂ des Flugkörpers 2 einen positiven Anstellwinkel α₃ gegenüber der Horizontalen H ein. Die Anströmung 3 trifft somit verstärkt auf die Unterseite des Rumpfs 20 des Flugkörpers 2, so dass unmittelbar nach dem Abkoppeln des Flugkörpers 2 vom Trägerluftfahrzeug 1 die Nase 26 des Flugkörpers 2 von der anströmenden Luft nach oben gerichtet würde, also ein die Nase 26 nach oben drehendes positives Nickmoment M_{N1} auf den Flugköper 2 ausgeübt würde. Ein derartiges positives Nickmoment ist jedoch nicht erwünscht, da dadurch eine Kollision des Flugkörpers 2 mit der Unterseite des Rumpfs 10 des Flugkörpers 1 hervorgerufen werden könnte.

Die Größe des Nickmoments (Nase nach oben) hängt auch von der Form des Flugkörpers, vom Abstand zur Rumpfunterseite ab (falls der Flugkörper unter dem Rumpf angebracht ist) oder vom Abstand zum Flügel sowie von der Form des Flügels ab (falls der Flugkörper unter dem Flügel angebracht ist), also von der geometrischen Anordnung des Flugkörpers am Trägerluftfahrzeug. Dieses positive Nickmoment wird möglicherweise durch das resultierende Moment der Abstoßkräfte (je nach Stärke der Abstoßkräfte und der Länge der Hebelarme zum Schwerpunkt des Flugkörpers) verstärkt, wodurch der Drehimpuls nach oben kräftiger ausfallen kann.

Das positive Nickmoment wird durch die Anströmung und gegebenenfalls das resultierende Moment der Abstoßkräfte induziert. Um diesem positiven Nickmoment M_{N1} entgegenzuwirken, werden die Steuerflächen 24 des Flugkörpers 2 so ausgeschwenkt, dass die Längsachse X₃ der Steuerflächen 24 gegenüber der Längsachse X₂ des Flugkörpers einen positiven Auslenkwinkel γ einnimmt. Die auf die so ausgelenkten aerodynamischen Steuerflächen 24 des Flugkörpers 2 auftreffende Anströmung 3 bewirkt ein die Nase 26 des Flugkörpers 2 nach unten drehendes negatives Nickmoment M_{N2}, welches dem durch den Anstellwinkel α₁ des Trägerluftfahrzeugs und den Installations-Anstellwinkel α₂ von der Anströmung 3 induzierten positiven Nickmoment M_{N1} entgegenwirkt. Das durch die Auslenkung der Steuerflächen 24 bewirkte Nickmoment M_{N2} ist dabei größer als das erste Nickmoment M_{N1}, so dass sich im Resultat ein negatives, die Nase des Flugkörpers nach unten drehendes resultierendes Nickmoment ergibt.

Aus der Darstellung der Figur 2 im Vergleich zur Darstellung in der Figur 1 ist zu erkennen, dass in der in der in Figur 2 dargestellten Langsamflugsituation vor dem Abkoppeln des Flugkörpers 2 vom Trägerluftfahrzeug 1 die aerodynamischen Steuerflächen 24 des Flugkörpers 2 um einen vorgegebenen positiven Winkel γ in eine Position ausgelenkt werden, in der die anströmende Luft ein die Nase 26 des Flugkörpers 2 nach unten drehendes Nickmoment erzeugt. Durch das Auslenken der aerodynamischen Steuerflächen 24 des Flugkörpers 2 wird somit auch im extremen Langsamflug verhindert, dass nach dem Abkoppeln des Flugkörpers 2 vom Trägerluftfahrzeug 1 die Nase 26 des Flugkörpers 2 nach oben dreht und mit der Unterseite des Rumpfs 10 des Trägerluftfahrzeugs 1 kollidiert.

Zur besseren Verdeutlichung der aerodynamischen Zusammenhänge sind die in den Figuren dargestellten Winkel, sowohl die Anstellwinkel α₁, α₂ und α₃, als auch der Auslenkwinkel γ übertrieben dargestellt. Ein in der Praxis geeigneter Auslenkwinkel für die aerodynamischen Steuerflächen 24 des Flugkörpers 2 kann bei bis zu γ = ±10° liegen. Dabei ist die eingeschränkte Ruderwirksamkeit bei langsamerer Strömungsgeschwindigkeit aufgrund des auf die Steuerflächen wirkenden Staudrucks zu beachten. Der Auslenkwinkel γ kann in Abhängigkeit vom Anstellwinkel α₁ des Flugkörpers 2 regelbar ausgebildet sein und zum Beispiel proportional zum Anstellwinkel α₁ des Trägerluftfahrzeugs 1 ansteigen. Hier kann jedoch eine Deckelung vorgesehen sein, das heißt, dass der Auslenkwinkel γ der Steuerungsflächen 24 ab einem vorgegebenen Anstellwinkel α₁ des Trägerluftfahrzeugs 1 konstant bleibt. Der Auslenkungswinkel steigt bei gegebenem Anstellwinkel des Trägerluftfahrzeugs auch bei höherer Geschwindigkeit und bei größerer Masse des Trägerluftfahrzeugs.

Um eine derartige Regelung zur ermöglichen, wird der aktuelle Anstellwinkel α₁ des Trägerluftfahrzeugs 1 von entsprechenden Sensoren im Trägerluftfahrzeug 1 gemessen und zusammen mit der Fluggeschwindigkeit (Mach-Zahl; KEAS), der Flughöhe und der Information über die Masse des Trägerluftfahrzeugs 1 über die vorhandene Datenverbindung zum Bordrechner des Flugkörpers 2 übertragen, der daraufhin den entsprechenden Auslenkwinkel γ über einen (nicht gezeigten) Stellantrieb für die Steuerungsflächen 24 einstellt.

Wenn das Installations-Nickmoment aufgrund der Anströmung sehr groß ist (zum Beispiel KEAS > 450), dann kann die Rudervoreinstellung beispielsweise so gewählt werden, dass das Installations-Nickmoment geschwächt wird, so dass die anschließend einsetzende Flugzustandsregelung den Flugkörper sicher unter Kontrolle bringen kann.

Bei einem kleinen bis mittleren Installations-Nickmoment aufgrund der Anströmung (300 < KEAS < 450), das einen sicheren Drehimpuls der Nase nach unten und damit den sicheren Abgang des Flugkörpers gewährleistet, kann die Rudervoreinstellung beispielsweise auf 0° eingestellt werden.

Bei einem geringen oder keinem oder bei einem positiven Installations-Nickmoment aufgrund der Anströmung (zum Beispiel KEAS < 300) können die Ruder beispielsweise so voreingestellt werden, dass sie ein negatives Installations-Nickmoment erzeugen, das zunächst die Drehung des Flugkörpers mit der Nase nach unten erzwingt, um dann anschließend von der Flugzustandsregelung mit einer geeigneten Drehrate wieder abgefangen zu werden.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Trägerluftfahrzeug
- 2: Flugkörper
- 3: Anströmung
- 10: Rumpf
- 12, 14: Halterungen
- 16: Nase
- 20: Rumpf
- 22: Tragflächen
- 24: Steuerflächen
- 25: horizontale Achse
- 26: Nase

## Patentansprüche

1. Verfahren zum Abkoppeln eines Flugkörpers (2) von einem Trägerluftfahrzeug (1), wobei der Flugkörper (2) an einer Unterseite des Trägerluftfahrzeugs (1) mittels einer Abkoppelvorrichtung lösbar angebracht ist und wobei beim Abkoppeln des Flugkörpers (2) vom Trägerluftfahrzeug (1) ein die Nase (26) des Flugkörpers (2) nach unten drehendes Nickmoment erzeugt wird;
**dadurch gekennzeichnet,**
**dass** bereits vor dem Abkoppeln des Flugkörpers (2) vom Trägerluftfahrzeug (1) aerodynamische Steuerflächen (24) des Flugkörpers (2) um einen vorgegebenen Winkel (γ) in eine Position ausgelenkt werden, in der die anströmende Luft das die Nase (26) des Flugkörpers (2) nach unten drehendes Nickmoment erzeugt.

2. Verfahren nach Anspruch 1,
**dadurch gekennzeichnet,**
**dass** der vorgegebene Winkel (γ) der Auslenkung der aerodynamischen Steuerflächen (24) unabhängig vom Anstellwinkel des Trägerluftfahrzeugs (1) im Zeitpunkt des Abkoppeins ist.

3. Verfahren nach Anspruch 2,
**dadurch gekennzeichnet,**
**dass** eine Flugzustandsregelung des Flugkörpers (2) unmittelbar nach dem Abkoppeln des Flugkörpers (2) einsetzt und zwar sobald die beim Abkoppeln auftretenden Abstoßimpulse abgeklungen sind.

4. Verfahren nach Anspruch 1,
**dadurch gekennzeichnet,**
**dass** die Auslenkung der Steuerflächen (24) des Flugkörpers (2) um den vorgegebenen Winkel (γ) erfolgt, wenn das Trägerluftfahrzeug (1) im Zeitpunkt des Abkoppelns einen vorgegebenen Anstellwinkel (α₁) überschreitet, wobei der Winkel (γ) der Auslenkung der Steuerflächen (24) oberhalb des vorgegebenen Anstellwinkels (α₁) konstant ist.

5. Verfahren nach Anspruch 1 oder 4,
**dadurch gekennzeichnet,**
**dass** der vorgegebene Winkel (γ) der Auslenkung der aerodynamischen Steuerflächen (24) abhängig vom Anstellwinkel des Trägerluftfahrzeugs (1) im Zeitpunkt des Abkoppelns ist.

6. Verfahren nach Anspruch 5,
**dadurch gekennzeichnet,**
**dass** der Winkel (γ), um den die Steuerflächen (24) des Flugkörpers (2) ausgelenkt werden, mit zunehmendem Anstellwinkel (α₁) des Trägerluftfahrzeugs (1) größer wird.

7. Verfahren nach einem der vorhergehenden Ansprüche,
**dadurch gekennzeichnet,**
**dass** das Trägerluftfahrzeug (1) und/oder der Flugkörper (2) mit einer Sicherheitseinrichtung versehen ist, die ein Abkoppeln des Flugkörpers (2) nur zulässt, wenn der aerodynamische Anstellwinkel (α₃) des Flugkörpers (2) unterhalb eines vorgegebenen Schwellenwertes liegt.

8. Verfahren nach einem der vorhergehenden Ansprüche,
**dadurch gekennzeichnet,**
**dass** die Abkoppelvorrichtung im Flug nur betätigbar ist, wenn das Trägerluftfahrzeug (1) eine Fluggeschwindigkeit erreicht hat, bei der der Anstellwinkel (α₁) des Trägerluftfahrzeugs (1) ausreichend ist, damit die anströmende Luft (3) auf den Flugkörper (2) ein die Nase (26) des Flugkörpers (2) nach unten drehendes Nickmoment ausübt.

## Claims

1. Method for decoupling a missile (2) from a carrier aircraft (1), the missile (2) being releasably attached to an underside of the carrier aircraft (1) by means of a decoupling device and a pitching moment that turns the nose (26) of the missile (2) downwards being produced when the missile (2) is decoupled from the carrier aircraft (1);
**characterized**
**in that**, even before the missile (2) is decoupled from the carrier aircraft (1), aerodynamic control surfaces (24) of the missile (2) are deflected by a predetermined angle (γ) into a position in which the inflowing air produces the pitching moment that turns the nose (26) of the missile (2) downwards.

2. Method according to Claim 1,
**characterized in that** the predetermined angle (γ) of the deflection of the aerodynamic control surfaces (24) is independent of the angle of attack of the carrier aircraft (1) at the time of the decoupling.

3. Method according to Claim 2,
**characterized**
**in that** a flight mode control of the missile (2) cuts in immediately after the decoupling of the missile (2), doing so as soon as the shock pulses from the separation that occur during the decoupling have died away.

4. Method according to Claim 1,
**characterized**
**in that** the deflection of the control surfaces (24) of the missile (2) by the predetermined angle (γ) takes place if the carrier aircraft (1) exceeds a predetermined angle of attack (α₁) at the time of the decoupling, the angle (γ) of the deflection of the control surfaces (24) being constantly above the predetermined angle of attack (α₁).

5. Method according to Claim 1 or 4,
**characterized**
**in that** the predetermined angle (γ) of the deflection of the aerodynamic control surfaces (24) is dependent on the angle of attack of the carrier aircraft (1) at the time of the decoupling.

6. Method according to Claim 5,
**characterized**
**in that** the angle (γ) by which the control surfaces (24) of the missile (2) are deflected becomes greater with increasing angle of attack (α₁) of the carrier aircraft (1).

7. Method according to one of the preceding claims,
**characterized**
**in that** the carrier aircraft (1) and/or the missile (2) is provided with a safety device, which only allows decoupling of the missile (2) if the aerodynamic angle of attack (α₃) of the missile (2) lies below a predetermined threshold value.

8. Method according to one of the preceding claims,
**characterized**
**in that** the decoupling device can only be actuated during flight when the carrier aircraft (1) has reached a flying speed at which the angle of attack (α₁) of the carrier aircraft (1) is sufficient for the inflowing air (3) to exert on the missile (2) a pitching moment that turns the nose (26) of the missile (2) downwards.

## Revendications

1. Procédé pour désaccoupler un corps volant (2) d'un avion lanceur (1), le corps volant (2) étant monté au niveau d'un côté inférieur de l'avion lanceur (1) de manière à pouvoir être détaché au moyen d'un dispositif de désaccouplement et, lors du désaccouplement du corps volant (2) de l'avion lanceur (1), un couple de basculement faisant tourner le nez (26) du corps volant (2) vers le bas étant généré,
**caractérisé en ce que**
déjà avant le désaccouplement du corps volant (2) de l'avion lanceur (1) des surfaces de commande aérodynamiques (24) du corps volant (2) sont déviées suivant un angle prédéfini (γ) dans une position dans laquelle l'air affluant génère le couple de basculement faisant tourner le nez (26) du corps volant (2) vers le bas.

2. Procédé selon la revendication 1,
**caractérisé en ce que**
l'angle prédéfini (γ) de déviation des surfaces de commande aérodynamiques (24) est indépendant de l'angle d'inclinaison de l'avion lanceur (1) au moment du désaccouplement.

3. Procédé selon la revendication 2,
**caractérisé en ce**
**qu'**une régulation d'états de vols du corps volant (2) s'établit directement après le désaccouplement du corps volant (2) et ce dès que les impulsions de répulsion produites lors du désaccouplement ont été éliminées.

4. Procédé selon la revendication 1,
**caractérisé en ce que**
la déviation des surfaces de commande (24) du corps volant (2) suivant l'angle prédéfini (γ) se produit lorsque l'avion lanceur (1), au moment du désaccouplement, dépasse un angle d'inclinaison prédéfini (α₁), l'angle (γ) de déviation des surfaces de commande (24) étant constant au-dessus de l'angle d'inclinaison prédéfini (α₁).

5. Procédé selon la revendication 1 ou 4,
**caractérisé en ce que**
l'angle prédéfini (γ) de déviation des surfaces de commande aérodynamiques (24) dépend de l'angle d'inclinaison de l'avion lanceur (1) au moment du désaccouplement.

6. Procédé selon la revendication 5,
**caractérisé en ce que**
l'angle (γ) suivant lequel les surfaces de commande (24) du corps volant (2) sont déviées augmente avec l'augmentation de l'angle d'inclinaison (α₁) de l'avion lanceur (1).

7. Procédé selon l'une quelconque des revendications précédentes,
**caractérisé en ce que**
l'avion lanceur (1) et/ou le corps volant (2) est/sont pourvus d'un dispositif de sécurité qui permet un désaccouplement du corps volant (2) uniquement lorsque l'angle d'inclinaison aérodynamique (α₃) du corps volant (2) est inférieur à une valeur seuil prédéfinie.

8. Procédé selon l'une quelconque des revendications précédentes,
**caractérisé en ce que**
le dispositif de désaccouplement ne peut être actionné en vol que lorsque l'avion lanceur (1) a atteint une vitesse de vol à laquelle l'angle d'inclinaison (α₁) de l'avion lanceur (1) est suffisant pour que l'air affluant (3) exerce sur le corps volant (2) un couple de basculement faisant tourner le nez (26) du corps volant (2) vers le bas.
